# EUROPÄISCHE PATENTSCHRIFT

(11) **EP 4 146 426 B1**
(45) Veröffentlichungstag und Bekanntmachung des Hinweises auf die Patenterteilung: **29.01.2025**
(21) Anmeldenummer: 21725064.6
(22) Anmeldetag: 04.05.2021
(51) Int. Cl.: B23K 1/005, B23K 26/03, B23K 26/21, B23K 26/38, B23K 31/00, B23K 31/12

(54) **VERFAHREN ZUM ANALYSIEREN EINES LASERBEARBEITUNGSPROZESSES, SYSTEM ZUM ANALYSIEREN EINES LASERBEARBEITUNGSPROZESSES UND LASERBEARBEITUNGSSYSTEM MIT EINEM SOLCHEN SYSTEM**
METHOD FOR ANALYSING A LASER MACHINING PROCESS, SYSTEM FOR ANALYSING A LASER MACHINING PROCESS AND LASER MACHINING SYSTEM COMPRISING A SYSTEM OF THIS TYPE
PROCÉDÉ POUR ANALYSER UN PROCESSUS D'USINAGE AU LASER, SYSTÈME POUR ANALYSER UN PROCESSUS D'USINAGE AU LASER ET SYSTÈME D'USINAGE AU LASER COMPRENANT UN TEL SYSTÈME

(30) Priorität: 05.05.2020 DE 102020112116
(43) Veröffentlichungstag der Anmeldung: 15.03.2023
(73) Patentinhaber: Precitec GmbH & Co. KG, 76571 Gaggenau (DE)
(72) Erfinder: SCHWARZ, Joachim, 8451 Kleinandelfingen (CH); KRAUSE, Martin, 76676 Graben-Neudorf (DE); MACK, Fabian, 76131 Karlsruhe (DE)
(74) Vertreter: Ter Meer Steinmeister & Partner
(86) Internationale Anmeldenummer: PCT/EP2021/061724
(87) Internationale Veröffentlichungsnummer: WO 2021/224255

(56) Entgegenhaltungen:
- CN-A- 109 940 305
- US-A1- 2013 178 953
- US-A1- 2018 341 248

## Beschreibung

Die vorliegende Erfindung betrifft ein Verfahren zum Analysieren eines Laserbearbeitungsprozesses an einem Werkstück, insbesondere an einem metallischen Werkstück, ein System zum Analysieren eines Laserbearbeitungsprozesses und ein Laserbearbeitungssystem zum Bearbeiten eines Werkstücks mittels Laserstrahl mit einem derartigen System, siehe Ansprüche 1, 9 und 12.

CN 109 940 305 A offenbart den Oberbegriff der Ansprüche 1 und 9.

### Hintergrund und Stand der Technik

In einem Laserbearbeitungssystem zum Bearbeiten eines Werkstücks mittels eines Laserstrahls wird der von einer Laserlichtquelle oder einem Ende einer Laserleitfaser austretende Laserstrahl mit Hilfe einer Strahlführungs- und Fokussieroptik auf das zu bearbeitende Werkstück fokussiert oder gebündelt, um das Werkstück lokal auf Schmelztemperatur zu erhitzen. Das Bearbeiten kann beispielsweise das Fügen, d.h. ein dauerhaftes Verbinden von Werkstücken, insbesondere ein Laserschweißen oder Laserlöten und das Laserschneiden umfassen. Insbesondere beim Laserschweißen oder -löten eines Werkstücks ist es wichtig, den Schweiß- bzw. Lötprozess zu überwachen und die Qualität des Bearbeitungsergebnisses, d.h. einer zwischen den Werkstücken entstandenen Verbindung, die durch eine Schweiß- bzw. Lötnaht gebildet wird, zu beurteilen, um die Bearbeitungsqualität zu sichern. Aktuelle Lösungen für die Überwachung von Laserbearbeitungsprozessen und die Qualitätsbeurteilung beim Laserschweißen umfassen für gewöhnlich eine sogenannte In- und Post-Prozess-Überwachung und entsprechende Überwachungssysteme. Die In-Prozess-Überwachung wird auch zum Steuern und Regeln des Laserbearbeitungsprozesses eingesetzt.

Dazu wird beispielsweise beim Laserschweißen die Intensität einer elektromagnetischen Strahlung unterschiedlicher Wellenlänge, die von einer Wechselwirkungszone zwischen dem Laserstrahl und dem Werkstück emittiert wird, insbesondere Plasmastrahlung, Temperaturstrahlung oder von einer Oberfläche des Werkstücks reflektierte oder zurückgestreute Laserstrahlung, erfasst und mittels Datenverarbeitung analysiert. Zur Analyse werden die erfassten Daten, beispielsweise entsprechende Intensitätsverläufe, mit vorgegebenen Referenzkurven oder Hüllkurven verglichen. Basierend auf vorgegebenen Fehlerkriterien wird vom Überwachungssystem ein Fehler ausgegeben. Kriterien können beispielsweise das Integral der Verläufe über den Hüllkurven oder das Unter- oder Überschreiten der Hüllkurven sein.

Ferner kann ein Bildsensor ein Bildsignal eines Schmelzbades während des Laserbearbeitungsprozesses erfassen. Mittels Bildverarbeitung können darin geometrische Merkmale des Schmelzbades, beispielsweise eine Geometrie des Schmelzbades, insbesondere Form, Grö-βe und Lage des Schmelzbades, erkannt und in die Überwachung mit einbezogen werden. Bei Abweichungen von vorgegeben Geometrien kann ebenfalls ein Fehler ausgegeben werden.

Basierend auf erkannten Fehlern kann die Schweißverbindung als "gut" (d.h. die verbundenen Werkstücke sind geeignet für die Weiterverarbeitung oder den Verkauf) oder als "schlecht" (d.h. die Werkstücke sind Ausschuss) klassifiziert werden. Darüber hinaus können Schweißungen in Fehlerklassen eingeteilt werden. Bei Überlappschweißungen beispielsweise gibt es die Klassen "fehlende Anbindung", "Spalt zu groß" oder "Loch" bzw. "Durchschuss". Ferner kann während des laufenden Laserbearbeitungsprozesses Einfluss auf die Regelung des Prozesses genommen werden.

Beim Laserschneiden bilden die Rauheit der Schnittkante, die Grathöhe, die Rechtwinkeligkeit der Schnittkanten und die Steilheit der Schneidfront Merkmale, welche Aufschluss über die Qualität des Laserbearbeitungsprozesses geben. Diese Merkmale werden typischerweise nach dem Prozess bestimmt, bzw. gemessen. Die Erkennung eines Schnittabrisses wird in Serienanlagen nicht während des Bearbeitungsprozesses durchgeführt. Die zulässige Qualität wird über die Messung dieser Merkmale bestimmt.

In herkömmlichen Überwachungssystemen ist die Analyse der aus dem Laserbearbeitungsprozess gewonnenen Daten komplex, da die Parameter der Datenverarbeitung und die Fehlerkriterien von vielen Faktoren abhängen und auch bei einer Änderung des Schweißprozesses angepasst werden müssen. Die Definition und Einstellung der Parameter erfolgt daher für gewöhnlich durch Experten. Die Erfahrung der Experten entscheidet demnach über eine zuverlässige Überwachung. Aufgrund der Komplexität erfolgt die Analyse der erfassten Daten typischerweise unabhängig voneinander. Eine Überwachung unter Berücksichtigung aller Daten findet nicht statt bzw. eine Fusion der in den Daten enthaltenen Informationen findet dabei erst am Ende der Verarbeitungskette statt. Die Komplexität bedingt auch eine fehlende Leistungsfähigkeit derartiger Überwachungssysteme.

Die Anmeldungen DE 10 2018 129 441.7 und DE 10 2018 129 425.5 beschreiben die Überwachung von Laserbearbeitungsprozessen mithilfe von tiefen faltenden neuronalen Netzen. Dadurch können eine Leistungsfähigkeit und eine Zuverlässigkeit der Klassifikation gesteigert werden.

Durch die immer weiter steigende Komplexität der Anwendungen von Laserbearbeitungsprozessen werden genauere Zuordnungen und Heuristiken für die Beurteilung des Prozesses bzw. eines Bearbeitungsergebnisses gefordert. Die Einteilung in zwei bzw. einige wenige Klassen erlaubt beispielsweise nicht, die Ursache für einen Bearbeitungsfehler zu bestimmen. Ein Rückschluss auf einen oder mehrere den Prozess bzw. das Bearbeitungsergebnis beschreibende physikalische Größen oder Eigenschaften ist nicht möglich.

Die Schweißnaht muss allerdings vorgegebene Kriterien erfüllen. Insbesondere muss die Schweißnaht eine vorgegebene Festigkeit, insbesondere eine Zug-, Druck- oder Scherfestigkeit, aufweisen. Durch eine oben beschriebene Klassifikation der Schweißnaht bzw. der Schweißverbindung ist es jedoch nicht möglich, den Wert einer physikalischen Eigenschaft, beispielsweise eine Festigkeit, eine Einschweißtiefe oder eine Leitfähigkeit, zu quantifizieren. Ein herkömmliches Überwachungssystem kann daher lediglich eine Klassifikation des Bearbeitungsergebnis liefern, aber keinen physikalischen Messwert bzw. einen Wert für eine physikalische Eigenschaft des Bearbeitungsergebnis in physikalischen Einheiten, der eine quantitative Aussage ermöglicht.

Bei einem Laserschnitt muss das geschnittene Material ebenfalls Kriterien in Form physikalischer Messwerte erfüllen. Die Rauigkeit der Schnittkanten und die Grathöhe kann beispielsweise in µm gemessen werden, die Rechtwinkeligkeit der Schnittkante wird in Grad gemessen.

Zur Ermittlung eines Werts einer physikalischen Eigenschaft eines Bearbeitungsergebnisses muss daher eine Messung nach der Laserbearbeitung durchgeführt werden. Um diese physikalische Eigenschaft der Schweißnaht festzustellen, muss die Schweißnaht bzw. die verschweißten Werkstücke einer Materialprüfung unterzogen werden. Beispielsweise werden die verschweißten Werkstücke einem Zugversuch unterzogen, um die Zugkraft in Newton zu ermitteln, bei der die Schweißnaht reißt. Dieser Wert wird als Zugfestigkeit der Schweißnaht definiert. Beim Schweißen von elektrischen Kontaktierungen kann die Leitfähigkeit der Schweißnaht in Siemens ermittelt werden. Diese Messung zur Materialprüfung führt allerdings meistens zur Zerstörung der Werkstücke und kann daher nicht für alle Werkstücke erfolgen.

### Offenbarung der Erfindung

Es ist eine Aufgabe der vorliegenden Erfindung, ein Verfahren anzugeben, mit dem der Wert einer physikalischen Eigenschaft eines Laserbearbeitungsprozesses bzw. eines Bearbeitungsergebnisses eines Laserbearbeitungsprozesses, insbesondere eines Schweiß-, Löt- oder Schneidprozesses, zerstörungsfrei bestimmt werden kann, ohne dass eine Messung des Werts vorgenommen werden muss.

Es ist ferner eine Aufgabe der vorliegenden Erfindung, ein Verfahren anzugeben, um die Bestimmung eines Werts einer physikalischen Eigenschaft eines Laserbearbeitungsprozesses bzw. eines Bearbeitungsergebnisses eines Laserbearbeitungsprozesses, insbesondere eines Schweiß-, Löt- oder Schneidprozesses, zu vereinfachen bzw. zu automatisieren.

Diese Aufgaben werden durch den Gegenstand der Ansprüche 1, 9 und 12 gelöst. Vorteilhafte Ausführungsformen und Weiterentwicklungen sind Gegenstand der entsprechenden abhängigen Ansprüche.

Gemäß einem ersten Aspekt der vorliegenden Offenbarung ist ein Verfahren zum Analysieren eines Laserbearbeitungsprozesses zum Bearbeiten von Werkstücken mittels eines Laserstrahls angegeben, wobei das Verfahren die folgenden Schritte umfasst: Erfassen von zumindest einem Sensordatensatz für den Laserbearbeitungsprozess; und Quantifizieren, oder Bestimmen eines Werts, von mindestens einer physikalischen Eigenschaft eines Bearbeitungsergebnisses des Laserbearbeitungsprozesses basierend auf dem zumindest einen Sensordatensatz mittels einer Übertragungsfunktion, wobei die Übertragungsfunktion durch ein angelerntes neuronales Netz gebildet ist.

Der Laserbearbeitungsprozess kann ein Fügen bzw. Verbinden von Werkstücken umfassen.

Der Laserbearbeitungsprozess kann ein Laserschneidprozess, ein Laserschweißprozess oder ein Laserlötprozess sein oder einen solchen umfassen. Das Bearbeitungsergebnis des Laserbearbeitungsprozesses kann die geschnittenen, gefügten bzw. verbundenen, d.h. die verschweißten oder verlöteten oder geschnittenen Werkstücke umfassen. Insbesondere kann das Bearbeitungsergebnis in diesem Fall eine Schweißverbindung bzw. Lötverbindung zwischen den gefügten Werkstücken bezeichnen. Die Schweißverbindung bzw. Lötverbindung kann durch eine Schweißnaht gebildet werden. Mit anderen Worten kann das Bearbeitungsergebnis in diesem Fall die Schweißnaht bzw. Lötnaht bezeichnen. Das Bearbeitungsergebnis kann auch einen Teil oder Bereich der Schweißverbindung bzw. der Schweißnaht bezeichnen. Zwischen den durch den Laserbearbeitungsprozess zu verbindenden Werkstücken kann ein Spalt vorhanden sein, welcher auf das Ergebnis der Schweißung Einfluss hat. Der Spalt kann, im Fall einer Stumpfstoßschweißung, als Raum zwischen zwei sich gegenüberliegenden Oberflächen der zu verbindenden Werkstücke oder, im Fall einer Überlappschweißung, als Raum zwischen den zu verbindenden Werkstücken bezeichnet werden. Ein Abstand zwischen den sich gegenüberliegenden Oberflächen der verbundenen Werkstücke kann als Spaltgröße bezeichnet werden. Ein zu großer Spalt kann einen Bearbeitungsfehler des Laserbearbeitungsprozesses darstellen. Im Fall einer Stumpfstoßschweißung wird der Spalt im Pre-Prozess, d.h. vor der Schweißung ermittelt, im Fall einer Überlappschweißung wird der Spalt über die Spanntechnik festgelegt.

Das Bearbeitungsergebnis des Laserbearbeitungsprozesses kann auch ein Zwischenergebnis des Laserbearbeitungsprozesses umfassen, d.h. ein Merkmal, das (auch oder nur) während der Durchführung des Laserbearbeitungsprozesses vorliegt. Insbesondere kann das Bearbeitungsergebnis eine Dampfkapillare, auch "Keyhole" genannt, und/oder ein Schmelzbad umfassen. Eine Keyhole-Tiefe kann hierbei als ein Abstand eines Bodens der Dampfkapillare zur Oberfläche des Werkstücks definiert sein, auf die der Laserstrahl eingestrahlt wird. Aus der Keyhole-Tiefe kann auf die Einschweißtiefe geschlossen werden.

Der Wert der physikalischen Eigenschaft des Bearbeitungsergebnisses entspricht einem für eine Messung der physikalischen Eigenschaft am Bearbeitungsergebnis vorhergesagten bzw. geschätzten Wert.

Mit anderen Worten wird die Bestimmung des Werts der physikalischen Eigenschaft als Vorhersage bzw. Schätzung eines Messwerts der physikalischen Eigenschaft betrachtet.

Diese Vorhersage bzw. Schätzung des Messwerts der physikalischen Eigenschaft wird anstelle einer tatsächlichen Messung treten, d.h. ohne dass eine Messung des Werts vorgenommen werden muss. Das Bestimmen des Werts der physikalischen Eigenschaft des Bearbeitungsergebnisses basierend auf dem Sensordatensatz mittels Übertragungsfunktion kann also dazu erfolgen, um einen Messwert der physikalischen Eigenschaft des Bearbeitungsergebnisses vorherzusagen bzw. abzuschätzen.

Die zumindest eine physikalische Eigenschaft des Bearbeitungsergebnisses umfasst entsprechend der Erfindung zumindest eine der folgenden umfassen: eine Festigkeit, insbesondere eine Zug-, Druck- und/oder Scherfestigkeit, einer durch den Laserbearbeitungsprozess hergestellten Schweiß- oder Lötverbindung, eine elektrische Leitfähigkeit einer durch den Laserbearbeitungsprozess hergestellten Schweiß- oder Lötverbindung, eine Keyhole-Tiefe, eine Einschweißtiefe in ein Werkstück, eine Spaltgröße zwischen zwei durch den Laserbearbeitungsprozess verbundenen Werkstücken, eine Rauigkeit einer Schnittkante eines durch den Laserbearbeitungsprozess geschnittenen Werkstücks, ein Grat bzw. eine Grathöhe einer Schnittkante eines durch den Laserbearbeitungsprozess geschnittenen Werkstücks, eine Steilheit der Schneidfront und eine Rechtwinkligkeit einer Schnittkante eines durch den Laserbearbeitungsprozess geschnittenen Werkstücks. Wenn mittels des erfindungsgemäßen Verfahrens die Keyhole-Tiefe oder die Steilheit der Schneidfront bestimmt bzw. vorhergesagt wird, kann auf separate Messeinrichtungen, beispielsweise optische Kohärenztomographen, bei einem Laserbearbeitungssystem zum Durchführen des Laserbearbeitungsprozesses verzichtet werden. Die Bestimmung eines Werts der Druckfestigkeit hingegen ist insbesondere bei auf Stumpfstoß verbundenen Werkstücken relevant. Das Bearbeitungsergebnis beim Laserschneiden kann durch die physikalischen Eigenschaften, wie beispielsweise der Rauigkeit der Schnittkanten oder dem Grat bzw. der Grathöhe der Schnittkanten oder Rechtwinkligkeit der Schnittkanten beschrieben werden.

Der Wert der physikalischen Eigenschaft kann in einer physikalischen Einheit, z.B. in einer "SI-Einheit" (Internationales Einheitensystem), bestimmt werden. Beispielsweise kann Festigkeit in Newton (N) oder Newton pro Fläche (N/m²), die Einschweißtiefe in µm, die Spaltgröße in µm und die elektrische Leitfähigkeit in Siemens (S) bestimmt werden. Die Rauigkeit einer Schnittkante kann z.B. mit der Einheit µm bestimmt werden.

Die Erfindung beruht also auf dem Gedanken, mithilfe eines neuronalen Netzes einen Wert für eine physikalische Eigenschaft des Bearbeitungsergebnisses anzugeben, d.h. die physikalische Eigenschaft zu quantifizieren, wobei das neuronale Netz zumindest einen für den Laserbearbeitungsprozess erfassten Sensordatensatz, vorzugsweise Rohdaten, als Eingangsdatensatz verwendet. Mithilfe des erfindungsgemäßen Verfahrens ist es also möglich, den Wert der physikalischen Eigenschaft des Bearbeitungsergebnisses des Laserbearbeitungsprozesses zerstörungsfrei zu bestimmen, ohne eine Messung des Werts am Bearbeitungsergebnis durchzuführen. Durch das erfindungsgemäße Verfahren kann ein Zusammenhang zwischen für den Laserbearbeitungsprozess erfassten Sensordaten und der physikalischen Eigenschaft des Bearbeitungsergebnisses quantitativ angegeben bzw. ermittelt werden, beispielsweise durch Regression. Durch das erfindungsgemäße Verfahren ist also eine Zuordnung eines Werts einer physikalischen Eigenschaft zum Bearbeitungsergebnis möglich. Die physikalische Eigenschaft kann ein Qualitätsmerkmal des Bearbeitungsergebnisses sein, welches beispielsweise durch einen Standard oder eine Norm, z.B. betreffend eine Materialbeschaffenheit, vorgegeben sein kann. Demnach kann eine Qualität des Bearbeitungsergebnisses, etwa von Schweißnähten bzw. Lötnähten und Schnittkanten anhand des bestimmten Werts der physikalischen Eigenschaft quantifiziert bzw. quantitativ beschrieben und bewertet werden, um so eine feingranulare Bewertungsmetrik zum Analysieren der Schweißnähte bzw. Lötnähte und Schnittkanten und der entsprechenden Laserbearbeitungsprozesse anzugeben.

Erfindungsgemäß werden also physikalische Größen bzw. Eigenschaften, die als interpretierbare Qualitätsmerkmale zur Beurteilung der Bearbeitungsqualität dienen, durch die Übertragungsfunktion des angelernten neuronalen Netzes prädiziert. Im Gegensatz zu einer einfachen Klassifikation des Bearbeitungsergebnisses werden die Eingangsdatensätze des neuronalen Netzes nicht nur einer Klasse, beispielsweise "gut" und "schlecht", zugeordnet, sondern einem absoluten Wert einer physikalischen Eigenschaft des Bearbeitungsergebnisses. Das erfindungsgemäße Verfahren erlaubt also als Erweiterung der Klassifikation mit einigen wenigen Klassen eine Regression auf Werte, vorzugsweise physikalischer Messwerte, für die physikalischen Eigenschaft. In der Inferenz können die für den Laserbearbeitungsprozess erfassten Sensordatensätze direkt durch die Übertragungsfunktion auf das Regressionsergebnis, d.h. auf den Wert der physikalischen Eigenschaft, abgebildet werden.

Der zumindest eine Sensordatensatz kann Sensordaten umfassen, die auf einer Messung von Prozessstrahlung des Laserbearbeitungsprozesses, vorzugsweise bei einer bestimmten Wellenlänge oder in einem bestimmten Wellenlängenbereich, basieren. Das Erfassen des Sensordatensatzes, beispielsweise also die Messung von Prozessstrahlung des Laserbearbeitungsprozesses, kann zeitaufgelöst und/oder über einen vorgegebenen Zeitraum erfolgen. Ein Sensordatensatz kann daher auch als "Zeitdatenreihe" bezeichnet werden. Die Prozessstrahlung kann elektromagnetische Strahlung umfassen, die während der Durchführung des Laserbearbeitungsprozesses aus einer Wechselwirkungszone zwischen dem Laserstrahl und einem Werkstück, auch als "Prozessbereich" oder "Bearbeitungsbereich" bezeichnet, emittiert oder reflektiert wird. Die Prozessstrahlung kann Temperaturstrahlung, Plasmastrahlung und vom Werkstück reflektierte und/oder zurückgestreute Laserstrahlung umfassen. Die Prozessstrahlung kann ferner ortsaufgelöst und/oder frequenzaufgelöst gemessen werden.

Der zumindest eine Sensordatensatz kann Sensordaten umfassen, die auf einer Messung von einem Prozessparameter des Laserbearbeitungsprozesses basieren, beispielsweise einer Fokuslage des Laserstrahls, eines Fokusdurchmessers des Laserstrahls, einer Position des Laserbearbeitungskopfes eines den Laserbearbeitungsprozess durchführenden Laserbearbeitungssystems, oder ähnliches.

Die Messung von Prozessstrahlung kann eine Messung der Strahlungsintensität der Prozessstrahlung umfassen. Dazu kann die Strahlungsintensität für einen vorgegebenen Zeitraum in zumindest einem vorgegebenen Wellenlängenbereich und/oder bei zumindest einer vorgegebenen Wellenlänge gemessen werden. Für jeden Wellenlängenbereich bzw. für jede Wellenlänge, in dem bzw. bei der die Strahlungsintensität gemessen wird, kann jeweils ein Sensordatensatz erfasst werden. Demnach bilden die über den vorgegebenen Zeitraum gemessenen Sensordaten der Strahlungsintensität in einem Wellenlängenbereich bzw. bei einer Wellenlänge einen Sensordatensatz. Die Strahlungsintensität kann ferner ortsaufgelöst und/oder frequenzaufgelöst gemessen werden.

Das Messen der Prozessstrahlung bzw. der Strahlungsintensität einer von einer Oberfläche des Werkstücks emittierten oder reflektierten Strahlung kann das Aufnehmen eines Bildes von der Oberfläche des Werkstücks umfassen. Mit anderen Worten kann ein Sensordatensatz zumindest ein Bild der Oberfläche bzw. eines Ausschnitts der Oberfläche des Werkstücks umfassen. Der Ausschnitt der Oberfläche kann den Bearbeitungsbereich umfassen. Das Bild kann ein Grauwertbild sein. Das Bild kann Helligkeits- und/oder Farbinformationen umfassen.

Der Wert der physikalischen Eigenschaft kann ferner basierend auf zumindest zwei Sensordatensätzen bestimmt werden. Beispielsweise kann der Wert der zumindest auf einer physikalischen Eigenschaft basierend auf zumindest zwei Sensordatensätzen bestimmt wird, die für denselben Zeitraum von verschiedenen Sensoren erfasst worden sind. Die Sensordatensätze können jeweils Sensordaten von Prozessstrahlung in verschiedenen Wellenlängenbereichen und/oder bei verschiedenen Wellenlängen enthalten. Alternativ kann ein erster Sensordatensatz auf Messung von Prozessstrahlung basieren, ein zweiter Sensordatensatz hingegen auf Messung von mindestens einem Prozessparameter. Durch die gleichzeitige Berücksichtigung mehrerer Sensordatensätze können verschiedene Größen abgebildet werden. Zudem kann die Bestimmung des Bearbeitungsergebnisses zuverlässiger und schneller erfolgen, insbesondere wenn eine end-to-end Verarbeitung ohne Vorverarbeitung angewendet wird. Dadurch kann die Überwachung des Laserbearbeitungsprozesses zuverlässiger und genauer erfolgen.

Der zumindest eine Sensordatensatz kann während und/oder nach der Durchführung des Laserbearbeitungsprozesses erfasst werden. Der Wert der physikalischen Eigenschaft kann während der Durchführung des Laserbearbeitungsprozesses oder nach der Beendigung des Laserbearbeitungsprozesses bestimmt werden. Dementsprechend kann das erfindungsgemä-βe Verfahren als In-Prozess- oder als Post-Prozess-Verfahren ausgebildet sein. Der Wert der physikalischen Eigenschaft kann zur Regelung des Laserbearbeitungsprozesses verwendet werden, insbesondere, wenn der Wert der physikalischen Eigenschaft während der Durchführung des Laserbearbeitungsprozesses bestimmt wird. Beispielsweise kann der Laserbearbeitungsprozess so geregelt werden, dass eine Differenz zwischen dem bestimmten Wert und einem Soll-Wert der physikalischen Eigenschaft des Bearbeitungsergebnisses oder eines folgenden Bearbeitungsergebnisses verringert wird. Wenn die physikalische Eigenschaft die Einschweißtiefe in ein Werkstück ist und der bestimmte Wert der Einschweißtiefe von einem Soll-Wert der Einschweißtiefe abweicht, kann der Laserbearbeitungsprozess so angepasst werden, dass für einen nachfolgenden Laserbearbeitungsprozess eine Differenz zwischen dem bestimmten Wert der Einschweißtiefe und einem aktuellen Soll-Wert abnimmt. Eine Regelung des Laserbearbeitungsprozesses kann eine Anpassung einer Fokuslage, eines Fokusdurchmessers des Laserstrahls, einer Laserleistung und/oder eines Abstands eines Laserbearbeitungskopfes umfassen.

Das erfindungsgemäße Verfahren kann während der Durchführung des Laserbearbeitungsprozesses kontinuierlich und/oder wiederholt durchgeführt werden. Mit anderen Worten können kontinuierlich und/oder wiederholt der zumindest eine Sensordatensatz erfasst und der Wert der zumindest einer physikalischen Eigenschaft bestimmt werden. Das Bestimmen der zumindest einen physikalischen Eigenschaft kann in Echtzeit erfolgen.

Der Wert der physikalischen Eigenschaft kann ferner basierend auf zumindest einem Steuerdatensatz des Laserbearbeitungsprozesses bestimmt werden. Der Steuerdatensatz kann Steuerdaten umfassen. Die Steuerdaten können von einer übergeordneten Steuereinheit zur Steuerung des Laserbearbeitungsprozesses vorgegeben werden. Die Steuerdaten können Sollwerte für Prozessparameter umfassen. Die Steuerdaten können zumindest Daten eines der folgenden umfassen: eine Ausgangsleistung eines Lasers, eine Fokuslage des Laserstrahls, einen Fokusdurchmesser des Laserstrahls, eine Position des Laserbearbeitungskopfes eines den Laserbearbeitungsprozess durchführenden Laserbearbeitungssystems, eine Bearbeitungsgeschwindigkeit, ein Bahnsignal, ein Werkstückmaterial und/oder eine Werkstückdicke. Das Bahnsignal kann ein Steuersignal des Laserbearbeitungssystems sein, welches eine Bewegung des Laserbearbeitungskopfes relativ zum Werkstück steuert. Die vorstehend genannten Steuerdaten können während des Laserbearbeitungsprozesses erfasst und in Echtzeit als Steuerdatensatz bereitgestellt werden. Der Steuerdatensatz kann für ein vorgegebenen Zeitraum zeitaufgelöste bzw. zeitabhängige Steuerdaten und/oder zeitunabhängige Steuerdaten umfassen.

Es ist vorteilhaft, wenn sich die in verschiedenen Datensätzen, also Sensordatensätze und/oder Steuerdatensätze, enthaltenen Daten entsprechen. Dies kann bedeuten, dass die in den verschiedenen Datensätzen enthaltenen Daten während desselben Zeitraums erfasst bzw. aufgezeichnet wurden. Ferner kann dies bedeuten, dass für vorgegebene Zeitpunkte innerhalb eines vorgegebenen Zeitraums in jedem der erfassten Datensätze Daten vorhanden sind. Dazu können die Sensordaten und/oder die Steuerdaten mit derselben Samplingfrequenz erfasst bzw. aufgezeichnet werden. Alternativ können Sensordaten und/oder die Steuerdaten interpoliert werden, oder es können Sensordaten und/oder Steuerdaten verworfen werden.

Die Übertragungsfunktion ist durch ein angelerntes oder trainiertes neuronales Netz gebildet. Das neuronale Netz kann durch Fehlerrückführung bzw. Backpropagation angelernt sein. Das neuronale Netz kann ein tiefes neuronales Netz, z.B. ein tiefes faltendes neuronales Netz oder Konvolutionsnetz, sein. Das Konvolutionsnetz kann mindestens eine sogenannte "Fully-Connected"-Schicht aufweisen.

Der zumindest eine Sensordatensatz kann als Eingangsdatensatz für das angelernte neuronale Netz dienen. Mehrere erfasste bzw. aufgezeichnete Datensätze können hierbei zu einem Eingangstensor für das neuronale Netz zusammengefasst werden. Alternativ kann jeder erfasste Datensatz einen separaten Eingangstensor bilden. In diesem Fall kann das neuronale Netz Einzelnetze für die verschiedenen erfassten Datensätze umfassen, die über zumindest eine gemeinsame Ausgangsschicht gekoppelt sind. Insbesondere kann das angelernte neuronale Netz eingerichtet sein, die Eingangstensoren, die von den verschiedenen erfassten Datensätzen gebildet werden, durch die Übertragungsfunktion auf einen gemeinsamen Ausgangsensor abzubilden.

Das angelernte neuronale Netz bzw. die Übertragungsfunktion kann den Wert der zumindest einen physikalischen Eigenschaft als Ausgangstensor ausgeben. Das neuronale Netz bzw. die Übertragungsfunktion kann auch Werte mehrerer physikalischer Eigenschaften gleichzeitig bestimmen und als Ausgangstensor ausgeben. Durch die gleichzeitige Quantifizierung von mehreren physikalischen Eigenschaften des Bearbeitungsergebnisses kann die Überwachung des Laserbearbeitungsprozesses zuverlässiger und genauer erfolgen.

Das angelernte neuronale Netz kann zum Transfer-Learning eingerichtet sein. Das Transfer-Learning kann basierend auf zumindest einem Trainingsdatensatz erfolgen. Der zumindest eine Trainingsdatensatz kann zumindest einen Trainings-Sensordatensatz des geänderten Laserbearbeitungsprozesses und zumindest einen entsprechenden vorgegebenen Wert der zumindest einen physikalischen Eigenschaft des Bearbeitungsergebnisses umfassen. Der vorgegebene Wert der zumindest einen physikalischen Eigenschaft kann durch direkte Messung am bearbeiteten Werkstück bestimmt worden sein. Der zumindest eine Trainingsdatensatz kann ferner einen Trainings-Steuerdatensatz des geänderten Laserbearbeitungsprozesses umfassen. Zum Anpassen bzw. Trainieren des neuronalen Netzes können mehrere Trainingsdatensätze verwendet werden.

Dadurch kann das neuronale Netz, welches die Übertragungsfunktion bildet, an eine geänderte Situation oder einen geänderten Laserbearbeitungsprozess angepasst werden. Die geänderte Situation kann beispielsweise darin bestehen, dass die zu bearbeitenden Werkstücke unterschiedliche Materialien, Verschmutzungsgrade und/oder Dicken aufweisen, oder dass die Parameter der Laserbearbeitung geändert werden. Beim Transfer-Learning können die für das Trainieren oder Anlernen des neuronalen Netzes verwendeten Trainingsdatensätze um neue Beispiele ergänzt werden. Die Verwendung eines trainierten neuronalen Netzes, das zum Transfer-Learning eingerichtet ist, hat also den Vorteil, dass das System schnell an geänderte Situationen, insbesondere an einen geänderten Laserbearbeitungsprozess, angepasst werden kann.

Das neuronale Netz kann ein RNN ("Reccurent Neural Network") sein, eine LSTM-Schicht ("long short term memory") und/oder zumindest eine GRU-Schicht ("gated reccurent units") umfassen. Dadurch kann eine Leistungsfähigkeit des neuronalen Netzes verbessert werden.

Die im Sensordatensatz enthaltenen Sensordaten können unverarbeitet, d.h. Rohdaten, sein. Die Abbildung der Sensordaten kann mithilfe der Übertragungsfunktion bzw. des angelernten neuronalen Netzes demnach ohne eine Datenvorverarbeitung erfolgen. In diesem Fall findet eine "end-to-end"-Abbildung statt, ohne vorher aus den Sensordaten Merkmale zu extrahieren, zu berechnen oder diese zu parametrieren. Das angelernte neuronale Netz kann also direkt auf Basis der Rohdaten den Wert der zumindest einen physikalischen Eigenschaft bestimmen. Ein Ergebnisneuron des neuronalen Netzes kann dann direkt den Wert der physikalischen Eigenschaft ausgeben.

Gemäß einem weiteren Aspekt der vorliegenden Erfindung ist ein System zum Analysieren eines Laserbearbeitungsprozesses angegeben, wobei das System eingerichtet ist, das zuvor beschriebene Verfahren durchzuführen. Das System umfasst eine Sensoreinheit, die eingerichtet ist, den zumindest einen Sensordatensatz für den Laserbearbeitungsprozess zu erfassen; und eine Analyseeinheit, die eingerichtet ist, den Wert der physikalischen Eigenschaft mittels der durch das angelernte neuronale Netz gebildeten Übertragungsfunktion zu bestimmen. Die Analyseeinheit kann die durch das angelernte neuronale Netz gebildete Übertragungsfunktion enthalten.

Die Sensoreinheit kann eine Diode, eine Photodiode, einen Bildsensor, einen Zeilensensor, eine Kamera, ein Spektrometer, einen Multispektralsensor und/oder einen Hyperspektralsensor umfassen.

Die Analyseeinheit kann eingerichtet sein, den Wert in Echtzeit zu bestimmen und/oder Regelungsdaten an ein den Laserbearbeitungsprozess durchführendes Laserbearbeitungssystem auszugeben.

Gemäß einem weiteren Aspekt der vorliegenden Erfindung ist ein Laserbearbeitungssystem zur Bearbeitung eines Werkstücks mittels eines Laserstrahls angegeben, wobei das Laserbearbeitungssystem einen Laserbearbeitungskopf zum Einstrahlen eines Laserstrahls auf ein zu bearbeitendes Werkstück und das zuvor beschriebene System zum Analysieren eines Bearbeitungsergebnisses umfasst. Das Laserbearbeitungssystem gemäß Ausführungsformern der vorliegenden Erfindung kann auch als "prädizierendes Überwachungssystem" bezeichnet werden. Das Laserbearbeitungssystem kann ein Laserschweißsystem, ein Laserlötsystem oder ein Laserschneidsystem sein. Das Laserbearbeitungssystem kann eine Steuereinheit umfassen. Die Analyseeinheit kann in der Steuereinheit integriert sein.

Gemäß der vorliegenden Erfindung kann also einem Bearbeitungsergebnis eine physikalische Größe bzw. Eigenschaft quantitativ zugeordnet werden, um die Qualität des Bearbeitungsergebnis zu bestimmen. Hierbei erfolgt die Zuordnung bzw. quantitative Bestimmung der physikalischen Eigenschaft durch ein In- und/oder Post-Prozess System basierend auf erfassten Sensordatensätzen, beispielsweise von erfasster Prozessstrahlung. Die Bestimmung des Werts der physikalischen Eigenschaft erfolgt vorzugsweise unter der gleichzeitigen Berücksichtigung von mehreren verschiedenen Sensordatensätzen bzw. von verschiedenen Arten der Prozessstrahlung. Auf diese Weise wird die Wertbestimmung genauer und zuverlässiger. Die Bestimmung des Werts der physikalischen Eigenschaft des Bearbeitungsergebnisses kann auf Rohdaten des Laserbearbeitungsprozesses basieren (sogenannte "end-to-end"-Datenverarbeitung). Auf eine Datenvorverarbeitung kann daher verzichtet werden, sodass das Verfahren schneller und einfacher ablaufen kann.

### Kurzbeschreibung der Zeichnungen

Ausführungsformen der vorliegenden Erfindung werden im Folgenden anhand von Figuren im Detail beschrieben.
Fig. 1 zeigt eine schematische Darstellung eines Laserbearbeitungssystems zum Bearbeiten von Werkstücken mittels eines Laserstrahls und ein System zum Analysieren eines Bearbeitungsergebnisses eines Laserbearbeitungsprozesses gemäß Ausführungsformen der vorliegenden Erfindung.
Fig. 2 zeigt ein Verfahren zum Analysieren eines Bearbeitungsergebnisses eines Laserbearbeitungsprozesses gemäß Ausführungsformen der vorliegenden Erfindung.
Fig. 3 zeigt ein Diagramm einer Zielfunktion beim Anlernen eines neuronalen Netzes gemäß Ausführungsformen der vorliegenden Erfindung.

### Detaillierte Beschreibung der Ausführungsformen

Im Folgenden werden, sofern nicht anders vermerkt, für gleiche und gleichwirkende Elemente gleiche Bezugszeichen verwendet.

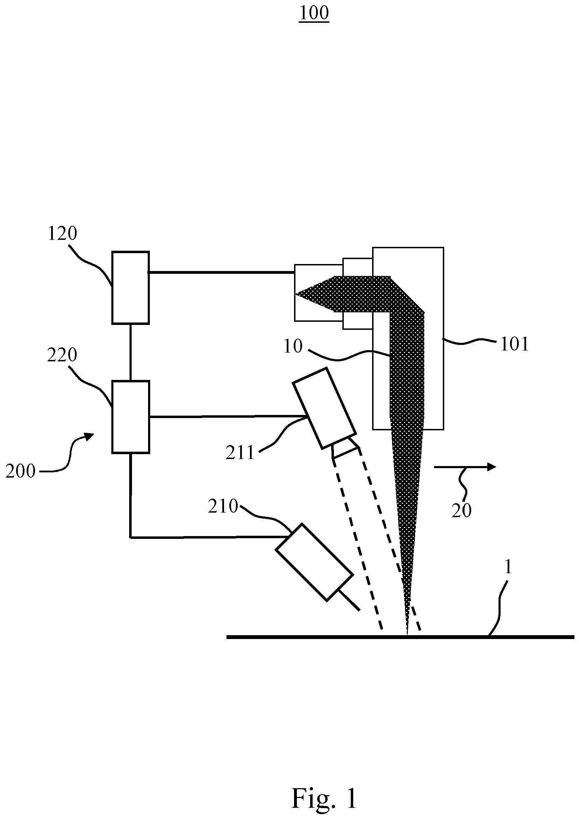

Figur 1 zeigt eine schematische Darstellung eines Laserbearbeitungssystems 100 zum Bearbeiten eines Werkstücks mittels eines Laserstrahls gemäß Ausführungsformen der vorliegenden Offenbarung. Das Laserbearbeitungssystem 100 ist dazu eingerichtet, einen Laserbearbeitungsprozess, insbesondere ein Laserschweißen, Laserlöten oder ein Laserschneiden, und das Verfahren zum Analysieren eines Bearbeitungsergebnisses des Laserbearbeitungsprozesses gemäß Ausführungsformen der vorliegenden Erfindung durchzuführen.

Das Laserbearbeitungssystem 100 umfasst einen Laserbearbeitungskopf 101, insbesondere einen Laserlöt-, Laserschneid- oder Laserschweißkopf, und ein System 200 zum Analysieren eines Bearbeitungsergebnisses des Laserbearbeitungsprozesses gemäß Ausführungsformen der vorliegenden Erfindung. Das Laserbearbeitungssystem 100 umfasst ferner eine Steuereinheit 120 zum Steuern des Laserbearbeitungssystem 100. Der Laserbearbeitungskopf 101 dient zum Bereitstellen eines Laserstrahls 10 (auch als "Bearbeitungsstrahl" oder "Bearbeitungslaserstrahl" bezeichnet) und kann Elemente zur Strahlformung und -führung des Laserstrahls 10 (nicht gezeigt) enthalten. Beim Durchführen des Laserbearbeitungsprozesses wird der Laserstrahl 10 auf das Werkstück 1 gerichtet bzw. eingestrahlt. Dabei wird Material des Werkstücks 1 geschmolzen und/oder verdampft, wodurch sich beispielsweise beim Schweißen oder Löten eine Dampfkapillare und ein die Dampfkapillare umgebendes Schmelzbad bildet. Dieser Wechselwirkungsbereich zwischen dem Laserstrahl 10 und dem Werkstück 1 kann auch als "Bearbeitungsbereich" bezeichnet werden.

Das Laserbearbeitungssystem 100 oder Teile davon, wie beispielsweise der Laserbearbeitungskopf 101, kann gemäß Ausführungsformen in einer Bearbeitungsrichtung 20 relativ zum Werkstück 1 bewegbar sein. Alternativ oder zusätzlich kann das Werkstück 1 relativ zum Laserbearbeitungssystem 100 bzw. zu Teilen davon entgegen der Bearbeitungsrichtung 20 bewegbar sein. Die Bearbeitungsrichtung 20 kann eine Schneid-, Schweiß-, Lötrichtung und/oder eine Bewegungsrichtung des Laserbearbeitungssystems 100, beispielsweise des Laserbearbeitungskopf 101, bezüglich des Werkstücks 1 sein. Insbesondere kann die Bearbeitungsrichtung 20 eine horizontale Richtung sein. Die Bearbeitungsrichtung 20 kann auch als "Vorschubrichtung" bezeichnet werden.

Das System 200 zum Analysieren eines Bearbeitungsergebnisses des Laserbearbeitungsprozesses umfasst eine Sensoreinheit 210 zum Erfassen eines Sensordatensatzes des Laserbearbeitungsprozesses. Der Sensordatensatz umfasst Sensordaten, die beispielsweise auf einer Messung von Prozessstrahlung oder von Strahlungsintensität einer Prozessstrahlung des Laserbearbeitungsprozesses aus dem Bearbeitungsbereich und einer von einer Oberfläche des Werkstücks emittierten oder reflektierten Strahlung basieren. Die Prozessstrahlung kann Temperaturstrahlung, Plasmastrahlung und reflektierte oder zurückgestreute Laserstrahlung umfassen. Die Sensoreinheit 210 kann dazu eine Diode, eine Photodiode, einen Zeilensensor, einen Bildsensor, eine Kamera, ein Spektrometer, einen Multispektralsensor und/oder einen Hyperspektralsensor umfassen. Beispielsweise können Daten über einen bestimmten Wellenlängenbereich mit Bildsensoren ortsaufgelöst oder mit Dioden nicht ortsaufgelöst oder mit Spektrometern frequenzaufgelöst erfasst werden. Alternativ oder zusätzlich kann der Sensordatensatz Sensordaten umfassen, die für einen oder mehrere Prozessparameter, etwa für Fokuslage, Fokusdurchmesser und/oder Abstand des Laserbearbeitungskopfs 101 zum Werkstück 1, während des Laserbearbeitungsprozesses erfasst werden. Entsprechend kann die Sensoreinheit 210 Sensoren zum Erfassen dieser Prozessparameter umfassen, beispielsweise einen kapazitiven oder induktiven Abstandssensor, ein optisches Kohärenztomographie-System, etc..

Das System 200 zum Analysieren eines Bearbeitungsergebnisses umfasst eine Analyseeinheit 220. Die Analyseeinheit 220 ist dazu eingerichtet, basierend auf dem zumindest einen für den durch das Laserbearbeitungssystem 100 durchgeführten Laserbearbeitungsprozess erfassten Sensordatensatz mittels einer Übertragungsfunktion einen Wert von zumindest einer physikalischen Eigenschaft zu bestimmen. Die Analyseeinheit 220 ist mit der Sensoreinheit 210 verbunden, sodass die Analyseeinheit 220 die von der Sensoreinheit 210 erfassten Sensordatensätze empfangen kann.

Die Analyseeinheit 220 enthält gemäß einer Ausführungsform einen Prozessor zum Ermitteln des Werts einer physikalischen Einheit gemäß Ausführungsformen der vorliegenden Erfindung. Die Übertragungsfunktion ist typischerweise in einem Speicher (nicht gezeigt) der Analyseeinheit 220 abgelegt oder als Schaltkreis, beispielsweise als FPGA, realisiert. Die Übertragungsfunktion ist durch ein angelerntes, d.h. vortrainiertes, neuronales Netz gebildet. Der Wert der zumindest einen physikalischen Eigenschaft wird durch Anwendung der Übertragungsfunktion auf den zumindest einen Sensordatensatz bestimmt. Der Speicher kann ausgebildet sein, weitere Daten, beispielsweise den bestimmten Wert, zu speichern. Die Analyseeinheit 220 kann mit der Steuereinheit 120 des Laserbearbeitungssystems 100 verbunden sein, um den bestimmten Wert an die Steuereinheit 120 zu übertragen. Gemäß einer Ausführungsform ist die Analyseeinheit 220 mit der Steuereinheit 120 kombiniert (nicht gezeigt). Mit anderen Worten kann die Funktionalität der Analyseeinheit 220 mit derjenigen der Steuereinheit 120 in einer gemeinsamen Verarbeitungseinheit kombiniert sein.

Die Analyseeinheit 220 kann ferner dazu eingerichtet sein, Steuerdaten von der Steuereinheit 120 des Laserbearbeitungssystems 100 zu empfangen und die Steuerdaten ebenfalls für die Bestimmung des Werts der physikalischen Eigenschaft zu verwenden. Die Steuerdaten können beispielsweise die Laserausgangsleistung, den Soll-Abstand des Bearbeitungskopfes 101 von der Oberfläche des Werkstücks 1, die Vorschubrichtung und -geschwindigkeit, jeweils zu einem gegebenen Zeitpunkt, umfassen.

Gemäß Ausführungsformen kann die Sensoreinheit 210 eine Bilderfassungseinheit 211 umfassen, die dazu ausgebildet ist, Bilder einer Oberfläche des Werkstücks 1 und/oder des Bearbeitungsbereichs des Laserbearbeitungsprozesses aufzunehmen und als Sensordatensatz an die Analyseeinheit 220 zu übertragen. Die Bilderfassungseinheit 211 ist gemäß einer Ausführungsform am Bearbeitungskopf 101 angeordnet oder daran befestigt. Beispielsweise kann die Bilderfassungseinheit 211 mit Bezug zur Bearbeitungsrichtung 20 nachfolgend an dem Bearbeitungskopf 101 angeordnet sein. Die Bilderfassungseinheit 211 kann koaxial oder geneigt zum Laserstrahl 10 ausgerichtet sein. Die Bilderfassungseinheit 211 kann ein Kamerasystem oder ein Stereo-Kamerasystem, z.B. mit Auflicht-Led-Beleuchtung, umfassen. Erfindungsgemäß entsprechen die Bilder einer zweidimensionalen Abbildung eines Ausschnitts der Werkstückoberfläche. Mit anderen Worten repräsentieren die erfassten Bilder ein zweidimensionales Bild der Werkstückoberfläche. Die Bilder können über einen vorgegebenen Zeitraum mit einer vorgegebenen Rate aufgenommen werden.

Die Steuereinheit 120 kann ferner dazu eingerichtet sein, den Bearbeitungskopf 101 und/oder die Sensoreinheit 210 und/oder die Bilderfassungseinheit 211 zu steuern.

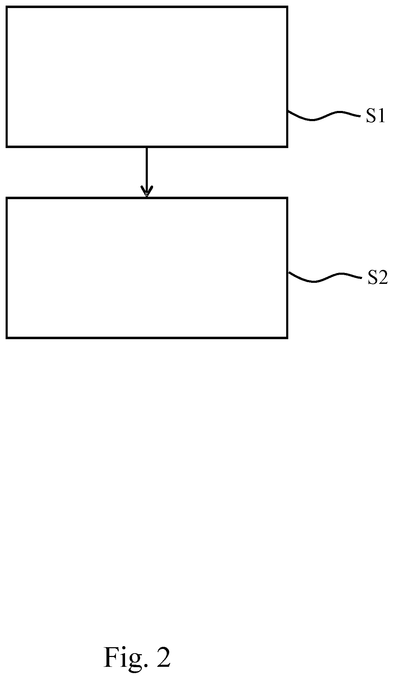

Fig. 2 zeigt ein Verfahren zum Analysieren eines Bearbeitungsergebnisses eines Laserbearbeitungsprozesses gemäß Ausführungsformen der vorliegenden Erfindung. Das Verfahren umfasst die folgenden Schritte: Erfassen von zumindest einem Sensordatensatz für den Laserbearbeitungsprozess (S1); und Bestimmen eines Werts von mindestens einer physikalischen Eigenschaft eines Bearbeitungsergebnisses des Laserbearbeitungsprozesses basierend auf dem zumindest einen Sensordatensatz mittels einer Übertragungsfunktion (S2), wobei die Übertragungsfunktion durch ein angelerntes neuronales Netz gebildet ist. Das zuvor mit Bezug auf Fig. 1 beschriebene Laserbearbeitungssystem 100 bzw. das zuvor beschriebene System 200 zum Analysieren eines Bearbeitungsergebnisses sind eingerichtet, das in Fig. 2 gezeigte Verfahren durchzuführen.

Gemäß Ausführungsformen umfasst der zumindest eine Sensordatensatz Messwerte einer Strahlungsintensität der von dem Bearbeitungsbereich des Laserbearbeitungsprozesses emittierten Temperaturstrahlung. Gemäß anderer Ausführungsformen können weitere Sensordatensätze erfasst und zur Bestimmung des Werts der physikalischen Eigenschaft verwendet werden. Beispielsweise können die Sensordatensätze Messwerte einer Strahlungsintensität bei verschiedenen Wellenlängen, beispielsweise einer Intensität von emittierter Plasmastrahlung und/oder von einer reflektierten Laserstrahlung, auch "Rückreflexstrahlung" genannt, umfassen. Ferner können die Sensordatensätze auch Bilder des Bearbeitungsbereichs des Laserbearbeitungsprozesses umfassen. All diese Sensordatensätze können Eingangsdatensätze für das neuronale Netz darstellen. Zusätzlich können auch prozessrelevante Eingangsgrößen bzw. Steuerdaten, wie etwa eine vorgegebene Laserleistung, eine vorgegebene Verarbeitungsgeschwindigkeit, ein Werkstückmaterial und/oder eine Werkstückdicke, als Eingangsdatensätze für das neuronale Netz verwendet werden.

Gemäß Ausführungsformen der vorliegenden Erfindung ist die betrachtete physikalische Eigenschaft, deren Wert durch das erfindungsgemäße Verfahren bestimmt bzw. vorhergesagt wird, die Festigkeit, insbesondere die Zugfestigkeit, einer Schweißverbindung zwischen zwei durch einen Laserschweißprozess verbundenen Werkstücken.

Zur Bestimmung eines Werts der Festigkeit werden die zuvor genannten Daten mit einer vorgegebenen Samplingrate über einen vorgegebenen Zeitraum, beispielsweise für die Dauer des Laserschweißprozesses, erfasst bzw. aufgezeichnet. Die Größe des Sensordatensatzes hängt also von der Samplingrate und der Dauer des Laserschweißprozesses und damit auch von der Länge der durch den Laserschweißprozess herzustellenden Schweißnaht ab. Der so erfasste Sensordatensatz wird auch "Zeitdatenreihe" oder "Zeitreihe" genannt und kann einen Eingangsvektor bzw. -tensor des neuronalen Netzes bilden. Wird die Prozessstrahlung bei verschiedenen Wellenlängen oder in verschiedenen Wellenlängenbereichen gemessen, können die entsprechend erfassten Sensordatensätze zu einem multidimensionalen Tensor zusammengefasst werden. Werden zusätzlich noch Bilder bzw. Bilddaten erfasst und zu den Sensordatensätzen hinzugefügt, entsteht ein höherdimensionaler Tensor.

Zum Anlernen des neuronalen Netzes, auch "Trainieren" genannt, vor Inbetriebnahme des erfindungsgemäßen Systems bzw. vor Durchführen des erfindungsgemäßen Verfahrens werden beispielhafte Trainingsdatensätze für das neuronale Netz erstellt. Dazu wird eine große Anzahl von Bearbeitungsprozessen, z.B. Schweißungen, durchgeführt und die zugehörige physikalische Eigenschaft des jeweiligen Bearbeitungsergebnisses experimentell gemessen. Für jede Schweißung werden beispielsweise die Intensitäten einer Temperaturstrahlung, einer reflektierten Laserstrahlung und/oder einer Plasmastrahlung während eines Laserbearbeitungsprozesses gemessen und in mindestens einem Sensordatensatz erfasst. Anschließend wird die mindestens eine physikalische Eigenschaft des Bearbeitungsergebnisses gemessen. Die physikalische Eigenschaft des Bearbeitungsergebnis wird vorzugsweise in einem Referenzmesssystem ermittelt, beispielsweise in einem herkömmlichen System zur Ermittlung der Zugkraft bzw. Zugfestigkeit. Jedem Sensordatensatz ist in den Trainingsdatensätzen der entsprechende gemessene Wert der physikalischen Eigenschaft zugeordnet.

In einem Beispiel zur Quantifizierung der Zugfestigkeit werden für eine große Anzahl von Schweißprozessen die Intensitäten der emittierten Prozessstrahlung, also von Temperaturstrahlung, rückreflektierter Laserstrahlung und Plasmastrahlung, während einer Schweißdauer von 0,5 s und mit einer Samplingrate von 50 KHz aufgenommen und daraus ein Tensor der Dimension 3 x 25000 gebildet. Ferner wird für jeden Schweißprozess der Wert der Zugkraft gemessen, bei der die gebildete Schweißnaht reißt. Die Messung erfolgt beispielsweise mit einem Referenzmesssystem. Die Zugkraft, bei der die Schweißnaht reißt, wird als die Zugfestigkeit der Schweißnaht definiert. Diese Werte der Zugkraft, typischerweise in Newton, werden den jeweiligen Tensoren zugeordnet, um Trainingsdatensätze zu erzeugen. Das neuronale Netz, welches insbesondere als tiefes neuronales Netz, beispielsweise mit einer Architektur aus faltenden Schichten, LSTM-Schichten und/oder vollständig vernetzten Schichten ausgebildet ist, wird anschließend mit diesen Trainingsdaten trainiert, um später einen Wert der Zugfestigkeit von mit diesem Schweißprozess hergestellten Schweißnähten vorherzusagen.

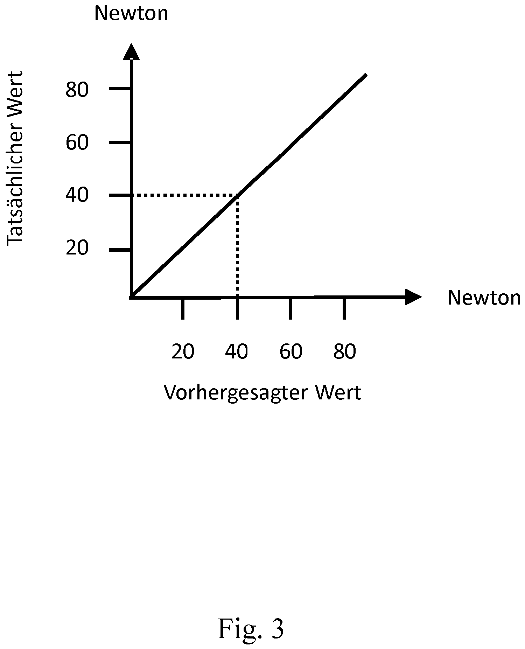

Beim Training des neuronalen Netzes werden also die Sensordatensätze bzw. die Zeitreihen auf die physikalische Eigenschaft, beispielsweise die Zugfestigkeit, abgebildet. Über ein Optimierungsverfahren, beispielsweise Backpropagation, wird die Zielfunktion, auch "Kostenfunktion" genannt, minimiert. Nach einer Optimierung der Zielfunktion auf null würde eine Zuordnung eines vorhergesagten bzw. geschätzten Werts der physikalischen Eigenschaft, beispielsweise der Zugfestigkeit, zum tatsächlich gemessen Wert eine Gerade bilden, wie in Fig. 3 dargestellt. Jeder vorhergesagte bzw. geschätzte Wert für die Zugkraft entspricht darin dem tatsächlichen gemessenen Wert. Da solche Messungen aber immer fehlerbehaftet sind, ist die in Fig. 3 dargestellte Kurve stark idealisiert.

Nach Abschluss des Trainings mit einer vorgegebenen Größe der Zielfunktion wird ein Modell erhalten, das das neuronale Netz und die Parameter des neuronalen Netzes enthält. Dieses Modell kann die Übertragungsfunktion gemäß Ausführungsformern der vorliegenden Erfindung sein. In der Inferenz, d.h. beim Durchführen des erfindungsgemäßen Verfahrens, werden die erfassten Sensordatensätze durch die Übertragungsfunktion auf einen Regressionswert bzw. auf einen Wert der physikalischen Eigenschaft abgebildet. Die Inferenz liefert somit direkt die prädizierte physikalische Eigenschaft, im beschriebenen Fall die Zugkraft, bei der die Schweißnaht reißen wird. Diese Vorgehensweise kann für alle physikalischen Eigenschaften, welche durch eine Messung an der durch den Laserschweißprozess hergestellten Schweißnaht bestimmt werden können, durchgeführt werden. Die Voraussetzung dafür ist lediglich, dass die Information über den vorherzusagenden Messwert für die jeweilige physikalische Eigenschaft in den Signalen aus dem Prozess enthalten ist.

Auch wenn vorstehend die vorliegende Erfindung anhand von Beispielen eines Schweißprozesses veranschaulicht wurde, ist die vorliegende Erfindung nicht darauf beschränkt. Der Laserbearbeitungsprozess kann auch ein Laserschneidprozess oder ein Laserlötprozess sein. Zur Beurteilung des Laserschneidprozesses können also auch entsprechende physikalische Eigenschaften, wie etwa eine Rauigkeit einer Schnittkante eines durch den Laserbearbeitungsprozess geschnittenen Werkstücks, ein Grat bzw. eine Grathöhe einer Schnittkante eines durch den Laserbearbeitungsprozess geschnittenen Werkstücks, eine Steilheit der Schneidfront und eine Rechtwinkligkeit einer Schnittkante eines durch den Laserbearbeitungsprozess geschnittenen Werkstücks, gemäß der vorliegenden Erfindung quantifiziert werden, um den Laserschneidprozess zu analysieren.

Ein Benutzer des Laserbearbeitungssystems gemäß Ausführungsformen der vorliegenden Offenbarung muss keine Parameter einstellen. Das grundlegende Training des neuronalen Netzes wird vor der Inbetriebnahme des Systems zum Analysieren des Laserbearbeitungsprozesses mit Trainingsdaten, die die zuvor im Feld erhobenen Beispieldaten und diesen zugeordneten Werten der betrachteten physikalischen Eigenschaft des Bearbeitungsergebnisses enthalten, durchgeführt. Bei kleineren Änderungen des Laserbearbeitungsprozesses kann ein Transfer-Learning des angelernten neuronalen Netzes durchgeführt werden.

Erfindungsgemäß kann also eine Regression des mindestens einen erfassten Sensordatensatzes auf einen Zahlenwert für die mindestens eine physikalische Eigenschaft durch das angelernte neuronale Netz erfolgen. Die Sensordatensätze können einen mehrdimensionalen Vektor bilden, typischerweise bestehend aus Zeitreihendaten wie beispielsweise von Temperaturstrahlung, Plasmastrahlung und/oder reflektierter Laserstrahlung, und direkt einen Eingangstensor des angelernten neuronalen Netzes bilden. Es findet also vorzugsweise eine "end-to-end" Abbildung statt, ohne vorher Merkmale zu extrahieren, zu berechnen oder diese zu parametrieren. Durch unterschiedliche Berücksichtigung bzw. Kombination der Eingangsdaten können dann durch die Übertragungsfunktion, d.h. durch das angelernte neuronale Netz, verschiedene physikalische Größen bzw. Eigenschaften quantifiziert werden. Das angelernte neuronale Netz gibt dann direkt das Regressionsergebnis, also den Wert der physikalischen Eigenschaft, aus.

Durch die Abbildung von einem oder mehreren Sensordatensätzen auf einen Wert mindestens einer physikalischen Eigenschaft und die daraus resultierende feingranulare Bewertungsmetrik können Laserbearbeitungsprozesse besser analysiert und an Material- bzw. Umweltschwankungen angepasst werden. Die vorliegende Erfindung ermöglicht die Akkumulation von Wissen auf Basis von während des Produktionslebenszyklus eines Laserbearbeitungssystems aggregierter Daten und kann damit im Laufe der Lebenszeit immer akkuratere Entscheidungsgrundlagen liefern.

### Bezugszeichenliste

| | |
|---|---|
| Werkstück | 1 |
| Laserstrahl | 10 |
| Bearbeitungsrichtung | 20 |
| Laserbearbeitungssystem | 100 |
| Laserbearbeitungskopf | 101 |
| Steuereinheit | 120 |
| System zum Analysieren eines Bearbeitungsergebnisses | 200 |
| Sensoreinheit | 210 |
| Bilderfassungseinheit | 211 |
| Analyseeinheit | 220 |

## Patentansprüche

1. Verfahren zum Analysieren eines Laserbearbeitungsprozesses, das Verfahren umfassend die Schritte:
- Erfassen (S 1) von zumindest einem Sensordatensatz für den Laserbearbeitungsprozess;
und **gekennzeichnet durch** Folgendes:
- Bestimmen (S2) eines Werts von mindestens einer physikalischen Eigenschaft eines Bearbeitungsergebnisses des Laserbearbeitungsprozesses zum Quantifizieren der mindestens einen physikalischen Eigenschaft basierend auf dem zumindest einen Sensordatensatz mittels einer Übertragungsfunktion,
wobei die Übertragungsfunktion durch ein angelerntes neuronales Netz gebildet ist,
wobei die physikalische Eigenschaft des Bearbeitungsergebnisses ausgewählt ist aus einer Gruppe, die eine Zugfestigkeit, eine Druckfestigkeit, eine elektrische Leitfähigkeit, eine Keyhole-Tiefe, eine Einschweißtiefe, eine Spaltgröße eines Spalts zwischen zwei durch den Laserbearbeitungsprozess verbundenen Werkstücken, eine Rauigkeit einer Schnittkante eines durch den Laserbearbeitungsprozess geschnittenen Werkstücks, einen Grat einer Schnittkante eines durch den Laserbearbeitungsprozess geschnittenen Werkstücks, eine Grathöhe einer Schnittkante eines durch den Laserbearbeitungsprozess geschnittenen Werkstücks, eine Steilheit der Schneidfront und eine Rechtwinkligkeit einer Schnittkante eines durch den Laserbearbeitungsprozess geschnittenen Werkstücks umfasst, und
wobei das Erfassen (S1) von zumindest einem Sensordatensatz auf einer Messung von Prozessstrahlung des Laserbearbeitungsprozesses und/oder auf einer Messung von mindestens einem Prozessparameter des Laserbearbeitungsprozesses basiert, wobei der mindestens eine Prozessparameter eine Keyhole-Tiefe, eine Fokuslage, einen Fokusdurchmesser und/oder einen Abstand eines den Laserbearbeitungsprozess ausführenden Laserbearbeitungskopfes (101) zu einem Werkstück (1) umfasst.

2. Verfahren gemäß Anspruch 1, wobei der zumindest eine Sensordatensatz auf einer Messung einer Strahlungsintensität von Prozessstrahlung des Laserbearbeitungsprozesses basiert und/oder ein Bild einer bearbeiteten Oberfläche eines Werkstücks umfasst.

3. Verfahren gemäß Anspruch 2, wobei die Strahlungsintensität für einen vorgegebenen Zeitraum und/oder in zumindest einem vorgegebenen Wellenlängenbereich und/oder bei zumindest einer vorgegebenen Wellenlänge und/oder ortsaufgelöst und/oder frequenzaufgelöst gemessen wird.

4. Verfahren gemäß einem der vorstehenden Ansprüche, wobei die Prozessstrahlung des Laserbearbeitungsprozesses zumindest eines von einer Temperaturstrahlung, einer Plasmastrahlung und einer von einer Oberfläche eines Werkstücks reflektierten Laserstrahlung umfasst.

5. Verfahren gemäß einem der vorstehenden Ansprüche, wobei der Wert der zumindest einen physikalischen Eigenschaft basierend auf zumindest zwei Sensordatensätzen bestimmt wird, die für denselben Zeitraum von verschiedenen Sensoren erfasst worden sind.

6. Verfahren gemäß einem der vorstehenden Ansprüche, wobei der zumindest eine Sensordatensatz während und/oder nach der Durchführung des Laserbearbeitungsprozesses erfasst wird, und/oder
wobei der Wert der physikalischen Eigenschaft während der Durchführung des Laserbearbeitungsprozesses und/oder nach der Beendigung des Laserbearbeitungsprozesses bestimmt wird.

7. Verfahren gemäß einem der vorstehenden Ansprüche, wobei der Wert der physikalischen Eigenschaft ferner basierend auf zumindest einem Steuerdatensatz des Laserbearbeitungsprozesses bestimmt wird.

8. Verfahren gemäß Anspruch 6 oder 7, wobei der zumindest eine Steuerdatensatz Steuerdaten für eine Laserleistung, einen Abstand eines den Laserbearbeitungsprozess ausführenden Laserbearbeitungskopfes zum Werkstück, eine Fokuslage, einen Fokusdurchmesser, ein Bahnsignal, ein Werkstückmaterial und/oder eine Werkstückdicke umfasst.

9. System (200) zum Analysieren eines Laserbearbeitungsprozesses, wobei das System (200) eingerichtet ist, das Verfahren gemäß einem der vorstehenden Ansprüche durchzuführen, das System (200) umfassend:
- eine Sensoreinheit (210), die eingerichtet ist, den zumindest einen Sensordatensatz für den Laserbearbeitungsprozess zu erfassen;
und das System **gekennzeichnet durch** das Folgende:
- eine Analyseeinheit (220), die eingerichtet ist, basierend auf dem zumindest einen für den durch das Laserbearbeitungssystem (100) durchgeführten Laserbearbeitungsprozess erfassten Sensordatensatz mittels einer Übertragungsfunktion einen Wert der zumindest einen physikalischen Eigenschaft mittels der durch das angelernte neuronale Netz gebildeten Übertragungsfunktion zu bestimmen, um die zumindest eine physikalische Eigenschaft zu quantifizieren,
wobei die physikalische Eigenschaft des Bearbeitungsergebnisses ausgewählt ist aus einer Gruppe, die eine Zugfestigkeit, eine Druckfestigkeit, eine elektrische Leitfähigkeit, eine Keyhole-Tiefe, eine Einschweißtiefe, eine Spaltgröße eines Spalts zwischen zwei durch den Laserbearbeitungsprozess verbundenen Werkstücken, eine Rauigkeit einer Schnittkante eines durch den Laserbearbeitungsprozess geschnittenen Werkstücks, einen Grat einer Schnittkante eines durch den Laserbearbeitungsprozess geschnittenen Werkstücks, eine Grathöhe einer Schnittkante eines durch den Laserbearbeitungsprozess geschnittenen Werkstücks, eine Steilheit der Schneidfront und eine Rechtwinkligkeit einer Schnittkante eines durch den Laserbearbeitungsprozess geschnittenen Werkstücks umfasst, und
wobei das Erfassen (S1) von zumindest einem Sensordatensatz auf einer Messung von Prozessstrahlung des Laserbearbeitungsprozesses und/oder auf einer Messung von mindestens einem Prozessparameter des Laserbearbeitungsprozesses basiert, wobei der mindestens eine Prozessparameter eine Keyhole-Tiefe, eine Fokuslage, einen Fokusdurchmesser und/oder einen Abstand eines den Laserbearbeitungsprozess ausführenden Laserbearbeitungskopfes (101) zu einem Werkstück (1) umfasst.

10. System (200) gemäß Anspruch 9, wobei die Sensoreinheit (210) eine Diode, eine Photodiode, einen Bildsensor, einen Zeilensensor, eine Kamera, einen Spektralsensor, einen Multispektralsensor und/oder einen Hyperspektralsensor umfasst.

11. System (200) gemäß einem der Ansprüche 9 oder 10, wobei die Analyseeinheit (220) eingerichtet ist, den Wert der zumindest einen physikalischen Eigenschaft in Echtzeit zu bestimmen und Regelungsdaten an ein den Laserbearbeitungsprozess durchführendes Laserbearbeitungssystem (100) auszugeben.

12. Laserbearbeitungssystem (100) zur Bearbeitung eines Werkstücks mittels eines Laserstrahls, wobei das Laserbearbeitungssystem (100) umfasst:
- einen Laserbearbeitungskopf (101) zum Einstrahlen eines Laserstrahls (10) auf ein zu bearbeitendes Werkstück (1); und
- ein System (200) gemäß einem der Ansprüche 9 bis 11.

## Claims

1. A method for analyzing a laser machining process, said method comprising the steps of:
- acquiring (S 1) at least one sensor data set for the laser machining process;
and **characterized by** comprising the following:
- determining (S2) a value of at least one physical property of a machining result of the laser machining process for quantifying the at least one physical property based on the at least one sensor data set using a transfer function,
said transfer function being formed by a trained neural network,
wherein the physical property of the machining result is selected from a group comprising a tensile strength, a compressive strength, an electrical conductivity, a keyhole depth, a welding depth, a gap size of a gap between two workpieces joined by the laser machining process, a roughness of a cut edge of a workpiece cut by the laser machining process, a burr of a cut edge of a workpiece cut by the laser machining process, a burr height of a cut edge of a workpiece cut by the laser machining process, a steepness of the cutting front and a perpendicularity of a cut edge of a workpiece cut by the laser machining process, and
wherein acquiring (S1) at least one sensor data set is based on a measurement of process radiation of the laser machining process and/or on a measurement of at least one process parameter of the laser machining process, wherein the at least one process parameter comprises a keyhole depth, a focus position, a focus diameter and/or a distance of a laser machining head (101) carrying out the laser machining process from a workpiece (1).

2. The method according to claim 1, wherein the at least one sensor data set is based on a measurement of a radiation intensity of process radiation of the laser machining process and/or comprises an image of a machined surface of a workpiece.

3. The method according to claim 2, wherein the radiation intensity is measured for a predetermined period of time and/or in at least one predetermined wavelength range and/or at at least one predetermined wavelength and/or in a spatially resolved manner and/or in a frequency-resolved manner.

4. The method according to one of the preceding claims, wherein the process radiation of the laser machining process comprises at least one of temperature radiation, plasma radiation, and laser radiation reflected from a surface of a workpiece.

5. The method according to one of the preceding claims, wherein the value of the at least one physical property is determined based on at least two sensor data sets that have been acquired by different sensors for the same period of time.

6. The method according to one of the preceding claims, wherein the at least one sensor data set is acquired during and/or after the execution of the laser machining process, and/or
wherein the value of the physical property is determined while the laser machining process is performed and/or after the laser machining process has been completed.

7. The method according to one of the preceding claims, wherein the value of the physical property is further determined based on at least one control data set of the laser machining process.

8. The method according to claim 6 or 7, wherein the at least one control data set comprises control data for a laser power, a distance between a laser machining head carrying out the laser machining process and the workpiece, a focus position, a focus diameter, a path signal, a workpiece material and/or a workpiece thickness.

9. A system (200) for analyzing a laser machining process, wherein said system (200) is configured to carry out the method according to one of the preceding claims, said system (200) comprising:
- a sensor unit (210) configured to acquire the at least one sensor data set for the laser machining process;
and the system being **characterized by** the following:
- an analysis unit (220) configured to determine, based on the at least one sensor data set acquired for the laser machining process carried out by the laser machining system (100), by means of a transfer function, a value of the at least one physical property by means of the transfer function formed by the trained neural network, in order to quantify the at least one physical property,
wherein the physical property of the machining result is selected from a group comprising a tensile strength, a compressive strength, an electrical conductivity, a keyhole depth, a welding depth, a gap size of a gap between two workpieces joined by the laser machining process, a roughness of a cut edge of a workpiece cut by the laser machining process, a burr of a cut edge of a workpiece cut by the laser machining process, a burr height of a cut edge of a workpiece cut by the laser machining process, a steepness of the cutting front and a perpendicularity of a cut edge of a workpiece cut by the laser machining process, and
wherein acquiring (S1) at least one sensor data set is based on a measurement of process radiation of the laser machining process and/or on a measurement of at least one process parameter of the laser machining process, wherein the at least one process parameter comprises a keyhole depth, a focus position, a focus diameter and/or a distance of a laser machining head (101) carrying out the laser machining process from a workpiece (1).

10. The system (200) according to claim 9, wherein said sensor unit (210) comprises a diode, a photodiode, an image sensor, a line sensor, a camera, a spectral sensor, a multispectral sensor and/or a hyperspectral sensor.

11. The system (200) according to one of claims 9 or 10, wherein said analysis unit (220) is configured to determine the value of the at least one physical property in real time and to output control data to a laser machining system (100) carrying out the laser machining process.

12. A laser machining system (100) for machining a workpiece by means of a laser beam, said laser machining system (100) comprising:
- a laser machining head (101) for radiating a laser beam (10) onto a workpiece (1) to be machined; and
- a system (200) according to one of claims 9 to 11.

## Revendications

1. Procédé d'analyse d'un processus d'usinage au laser, le procédé comprenant l'étape consistant à :
- acquérir (S1) au moins un ensemble de données de capteur pour le processus d'usinage au laser ;
et **caractérisé par** l'étape suivante consistant à :
- déterminer (S2) une valeur d'au moins une propriété physique d'un résultat d'usinage du processus d'usinage au laser afin de quantifier la au moins une propriété physique sur la base du au moins un ensemble de données de capteur au moyen d'une fonction de transfert,
dans lequel la fonction de transfert est formée par un réseau neuronal entraîné,
dans lequel la propriété physique du résultat d'usinage est choisie parmi un groupe comprenant une résistance à la traction, une résistance à la compression, une conductivité électrique, une profondeur de trou de serrure, une profondeur de soudage, une taille d'interstice d'un interstice entre deux pièces assemblées par le processus d'usinage au laser, une rugosité d'un bord coupé d'une pièce découpée par le processus d'usinage au laser, une bavure d'un bord coupé d'une pièce découpée par le processus d'usinage au laser, une hauteur de bavure d'une bord coupé d'une pièce découpée par le processus d'usinage au laser, une pente du front de coupe et une perpendicularité d'un bord coupé d'une pièce découpée par le processus d'usinage au laser, et
dans lequel l'acquisition (S1) d'au moins un ensemble de données de capteur est basée sur une mesure d'un rayonnement de processus du processus d'usinage au laser et/ou sur une mesure d'au moins un paramètre de processus du processus d'usinage au laser, dans lequel le au moins un paramètre de processus comprend une profondeur de trou de serrure, une position focale, un diamètre focal et/ou une distance d'une tête d'usinage au laser (101) exécutant le processus d'usinage au laser par rapport à une pièce (1).

2. Procédé selon la revendication 1, dans lequel le au moins un ensemble de données de capteur est basé sur une mesure d'une intensité de rayonnement du rayonnement de processus du processus d'usinage au laser et/ou comprend une image d'une surface usinée d'une pièce.

3. Procédé selon la revendication 2, dans lequel l'intensité de rayonnement est mesurée pendant une période de temps prédéterminée et/ou dans au moins une gamme de longueurs d'onde prédéterminée et/ou à au moins une longueur d'onde prédéterminée et/ou d'une manière spatialement résolue et/ou d'une manière fréquentiellement résolue.

4. Procédé selon l'une des revendications précédentes, dans lequel le rayonnement de processus du processus d'usinage au laser comprend au moins un rayonnement parmi un rayonnement thermique, un rayonnement plasma et un rayonnement laser réfléchi par une surface d'une pièce.

5. Procédé selon l'une des revendications précédentes, dans lequel la valeur de la au moins une propriété physique est déterminée sur la base d'au moins deux ensembles de données de capteur qui ont été acquis par différents capteurs sur la même période de temps.

6. Procédé selon l'une des revendications précédentes, dans lequel le au moins un ensemble de données de capteur est acquis pendant et/ou après l'exécution du processus d'usinage au laser et/ou
dans lequel la valeur de la propriété physique est déterminée pendant l'exécution du processus d'usinage au laser et/ou après la fin du processus d'usinage au laser.

7. Procédé selon l'une des revendications précédentes, dans lequel la valeur de la propriété physique est en outre déterminée sur la base d'au moins un ensemble de données de commande du processus d'usinage au laser.

8. Procédé selon la revendication 6 ou 7, dans lequel le au moins un ensemble de données de commande comprend des données de commande pour une puissance de laser, une distance d'une tête d'usinage au laser exécutant le processus d'usinage au laser par rapport à la pièce, une position focale, un diamètre focal, un signal de trajet, un matériau de pièce et/ou une épaisseur de pièce.

9. Système (200) d'analyse d'un processus d'usinage au laser, dans lequel le système (200) est configuré pour mettre en oeuvre le procédé selon l'une des revendications précédentes, le système (200) comprenant :
- une unité de capteur (210) configurée pour acquérir le au moins un ensemble de données de capteur pour le processus d'usinage au laser ;
et le système est **caractérisé par** ce qui suit :
- une unité d'analyse (220) configurée pour déterminer au moyen d'une fonction de transfert, sur la base du au moins un ensemble de données de capteur acquis pour le processus d'usinage au laser exécuté par le système d'usinage au laser (100), une valeur de la au moins une propriété physique au moyen de la fonction de transfert formée par le réseau neuronal entraîné, afin de quantifier la au moins une propriété physique,
dans lequel la propriété physique du résultat d'usinage est choisie parmi un groupe comprenant une résistance à la traction, une résistance à la compression, une conductivité électrique, une profondeur de trou de serrure, une profondeur de soudage, une taille d'interstice d'un interstice entre deux pièces assemblées par le processus d'usinage au laser, une rugosité d'un bord coupé d'une pièce découpée par le processus d'usinage au laser, une bavure d'un bord coupé d'une pièce découpée par le processus d'usinage au laser, une hauteur de bavure d'une bord coupé d'une pièce découpée par le processus d'usinage au laser, une pente du front de coupe et une perpendicularité d'un bord coupé d'une pièce découpée par le processus d'usinage au laser, et
dans lequel l'acquisition (S1) d'au moins un ensemble de données de capteur est basée sur une mesure d'un rayonnement de processus du processus d'usinage au laser et/ou sur une mesure d'au moins un paramètre de processus du processus d'usinage au laser, dans lequel le au moins un paramètre de processus comprend une profondeur de trou de serrure, une position focale, un diamètre focal et/ou une distance d'une tête d'usinage au laser (101) exécutant le processus d'usinage au laser par rapport à une pièce (1).

10. Système (200) selon la revendication 9, dans lequel l'unité de capteur (210) comprend une diode, une photodiode, un capteur d'image, un capteur de lignes, une caméra, un capteur spectral, un capteur multispectral et/ou un capteur hyperspectral.

11. Système (200) selon l'une des revendications 9 ou 10, dans lequel l'unité d'analyse (220) est configurée pour déterminer la valeur de la au moins une propriété physique en temps réel et pour fournir des données de commande à un système d'usinage au laser (100) exécutant le processus d'usinage au laser.

12. Système d'usinage au laser (100) destiné à usiner une pièce au moyen d'un faisceau laser, dans lequel le système d'usinage au laser (100) comprend :
- une tête d'usinage au laser (101) pour projeter un faisceau laser (10) sur une pièce (1) à usiner ; et
- un système (200) selon l'une des revendications 9 à 11.
